# EUROPEAN PATENT SPECIFICATION

(11) **EP 0 407 440 B1**
(45) Date of publication and mention of the grant of the patent: **17.08.1994**
(21) Application number: 89904129.7
(22) Date of filing: 17.03.1989
(51) Int. Cl.: A01M 7/00, A01C 23/04, B05B 7/32

(54) **PREPARING MIXED LIQUIDS**
HERSTELLUNG EINER MISCHUNG AUS FLÜSSIGKEITEN
PREPARATION DE MELANGES DE LIQUIDES

(30) Priority: 17.03.1988 GB 8806352
(43) Date of publication of application: 16.01.1991
(73) Proprietor: BRITISH TECHNOLOGY GROUP LIMITED, London SE1 6BU (GB)
(72) Inventor: FROST, Andrew, Richard, Stevington Bedford MK43 7QN (GB); MARCHANT, John, Arthur, Bedford MK41 8DB (GB)
(74) Representative: Chandler, Derek Richard
(86) International application number: GB8900287
(87) International publication number: WO8908390

(56) References cited:
- AT-B- 3 407 16
- FR-A- 1 296 950
- GB-A- 2 048 091
- US-A- 1 422 705
- US-A- 2 323 618
- US-A- 4 721 245

## Description

This invention relates to the mixing of liquids for agricultural purposes and more particularly to the preparation of spray liquids and nutrient solutions.

Liquids for agricultural purposes are often prepared by diluting a concentrate with water. Spray liquid is generally prepared by adding a small quantity of active ingredients in liquid form to a large quantity of carrier liquid, usually water, in a tank on the sprayer. It is important to produce a spray liquid which has the correct proportion of active ingredient so that the expected action, be it pesticidal, herbicidal or other, is obtained. Furthermore it is important to apply the correct quantity of spray liquid uniformly to a given area. All of the prepared spray liquid will usually be used in spraying but if spraying has to be interrupted or an error is made a quantity of spray liquid can remain and is not easily disposed of. For legal and environmental reasons the traditional technique of adding the active ingredient to a tank of water is thus no longer an acceptable one.

Proposals have been made for equipment which continuously adds the active ingredient to the carrier liquid as this is pumped to the spray head. In this way many of the problems of the traditional technique outlined above are in theory overcome. However the continuous addition of active ingredient is not easy. The active ingredient is often a very "aggressive" chemical, either itself or because of the solvent used, the mixing ratio required can vary over a wide range and the flow rate will have to vary with sprayer speed over the ground, while the carrier liquid can be at a high pressure, usually several bars.

Nutrient solutions are subject to similar requirements, the major one being generally the correct concentration.

Among proposals for continuous mixing are the use of diaphragm pumps driven at controlled speed to pump the active ingredient into a mixing device (Walsh Manufacturing company) and the use of a metering device driven by ground wheel to inject the active ingredient from a storage tank pressurised with compressed air (Terramatic). These proposals require pumps or like devices to handle the active ingredient, with all the problems this incurs.

FR-A-1422705 (Dorman) shows a spraying equipment in which a carrier liquid is pumped to exert pressure in a pressure vessel containing a flexible reservoir for the active ingredient. The pumped carrier liquid compresses the flexible reservoir to force the active ingredient along a conduit to a mixing chamber. Pumped carrier liquid is bled-off from the pressure vessel through a restriction to be at a pressure reduced below that in the vessel and then fed to the mixing chamber. The proportion of active material is determined by manually adjustable pressure relief valves in the carrier liquid flow paths into and out of the pressure vessel and by the choice of size for the restriction. While this arrangement could produce a steady proportion of active ingredient during a spraying action the proportion would have to be set by experiment or from a record of earlier settings of the valves and restrictor size. GB-A-2048091 (Agmet) shows a spraying equipment which also uses pumped carrier liquid to displace active ingredient by copression of a flexible reservoir and to feed a spray boom after addition of displaced active ingredient. Here however two flow meters are provided, one for each carrier liquid flow, and are used to send inputs to a controller which controls valves in each carrier liquid flow to maintain a required active ingredient proportion. While control is easier with two flowmeters and two remotely-controlled flow regulating valves, at significant expense and complexity, are required. While both the above proposals avoid the need to pump the active ingredient the control of proportion of active ingredient is either difficult or requires expensive devices. Furthermore the active ingredient has to be in a flexible container.

It is an object of the invention to overcome the problems of preparing agricultural liquids by mixing.

According to the invention there is provided a method of preparing a mixture of a carrier liquid and an active liquid in required proportion characterised by: providing a flow of pressurised carrier liquid, determining the carrier liquid flow rate from pressure measurement, providing a pumped liquid flow of a proportion of said carrier liquid flow, making pressure difference measurements of the pumped proportional liquid flow, controlling said pumped proportional liquid flow to a selected required proportion of said carrier liquid flow from said pressure difference measurements and independently of the pressure of the pressurised carrier liquid, displacing active liquid with said pumped proportional liquid flow without liquid contact, conveying said displaced active liquid freely to said carrier liquid flow, including said displaced active liquid in said carrier liquid flow, thereby producing a liquid mixture in said required proportion without a flow meter for said carrier liquid or said active liquid.

According to the invention there is provided an apparatus to prepare a mixed liquid including means to supply pressurised carrier liquid along a path to utilisation means, a container for a supply of active ingredient liquid, a flow path to introduce active ingredient liquid from the container into the pressurised carrier liquid supply path, liquid isolating means operable to displace active ingredient liquid from said container for introduction into the carrier liquid supply path, a pump to supply a displacement medium to operate the liquid isolating means to displace active ingredient liquid and a controller for said pump characterised in that the pump has associated pressure transducers of the pressure difference across the pump and the controller is responsive to signals from the transducers of said pressure difference to cause said pump to supply displacement medium to produce a mixed liquid of specified properties for supply along said path to the utilisation means.

The displacement medium may be carrier liquid from the pressurised supply upstream of the means to introduce active ingredient liquid. The means to supply displacement medium may include a pump and associated pressure transducers of the pressure difference across the pump and a pump control means responsive to signals from the transducers. The pump for the displacement medium may be further controlled in response to signals representing the operation of the utilisation means, said means being at least one of a sprayer or nutrient film equipment.

The signals may be processed in a calculating device, such as a dedicated microcomputer or like arrangement, in the pump control means to produce a pump control signal. When the utilisation means is a sprayer the signals may include sprayer speed over the ground, sprayer boom size, required active ingredient concentration, spray liquid flow rate and the like.

The apparatus may be arranged so that any carrier liquid pump does not have to handle the active ingredient. The active ingredient may be drawn into the container by reversing the action of the displacement medium.

The apparatus may include flushing means operable on the completion of displacement of active ingredient liquid to supply a flushing liquid to the container and the introduction flow path. The flushing means, particularly when the displacement medium is the carrier liquid, may include a valve operable to bypass the liquid isolating means on displacement to its furthest extent and allow carrier liquid to flush the container and introduction means.

Embodiments of the invention will now be described with reference to the accompanying drawings in which:

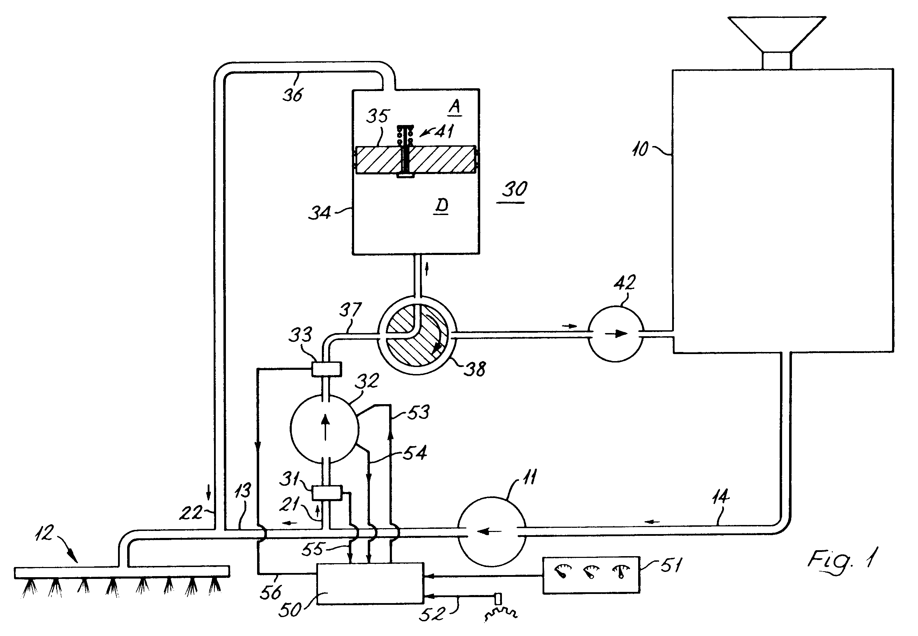

Figure 1 shows in block schematic outline spray liquid preparation according to the invention, and
Figure 2 shows a graph useful in understanding the invention.

A carrier liquid tank 10 is connected by conduit 14 to a pump 11 which in turn supplies liquid at a suitable pressure over conduit 13 to spray boom 12. These devices are well-known in the art, in many forms, and need no further description. Similarly the methods of support are many and well-known. At 21 and 22 there are connections to conduit 13. Connection 21 permits pressurised carrier liquid to be drawn off and connection 22 permits active ingredient liquid to be introduced into the pressurised carrier liquid in supply to the spray boom to produce the spray liquid for dispersal as active spray.

Reference 30 indicates generally the items for causing the active ingredient to be introduced into the carrier liquid at connection 22. A conduit 37 extends from connection 21 to a pump 32 via a pressure transducer 31 and on from pump 32 via a further pressure transducer 33 and changeover valve 38 to an active ingredient liquid container 34. Container 34 is connected to connection 22 by conduit 36.

Container 34 is a piston-and-cylinder arrangement of two volumes, A and D, isolated from one another by free piston 35. Free piston 35 can move from one end to the other of container 34, enlarging one of the volumes and reducing the other.

In operation, in outline, piston 35 is positioned with volume A large and volume D small. Volume A contains active ingredient in liquid form. Tank 10 contains carrier liquid, usually water. When pump 11 is supplying pressurised carrier liquid from tank 10 to sprayboom 12 the pump 32 is controllably operated to supply pressurised carrier liquid over conduit 37, from connection 21, as displacement medium to displace piston 35 to reduce volume A and force active ingredient liquid via conduit 36 to connection 22 where it mixes with the carrier liquid to produce a required spray liquid for dispersion by spray boom 12. Of course the areas of the piston in each volume need not be the same.

The exact amount of displacement medium supplied by pump 32 is controlled by a calculating device such as microcomputer 50. Typically this receives signals 55 and 56 from transducers 31 and 33, which represent displacement medium pressure, signal 52 representing sprayer speed over the ground and signals from control unit 51 for boom size, active ingredient concentration and other parameters in accordance with an operator's requirements. In particular the transducer 31 indicates carrier liquid pressure which is related to flow rate and signal 55 can therefore be used to assist in the control of the displacement of active ingredient to maintain a required concentration in the spray liquid, or to vary the concentration to compensate for a variation in operation, say boom section in use or speed, which requires an alteration in the amount of active ingredient to maintain a specific dosage to the crop. Pump 32 includes a sensor to indicate speed as signal 51, and there is a control line 53 to regulate the operation of the pump. A suitable control and calculating device can be designed using the Zeigler and Nichols method (Applied Digital Control, J.R. Leigh, Prentice-Hall 1985) although other designs are of course possible. The controller is a proportional plus integral plus derivative type. The controller transfer function coefficient c is increased as far as possible to reduce the time to respond to a step input without incurring overshoot. When c reaches 1.75 V.s/ml a response to 90% of the instructed output is achieved in less than one second. For ramp inputs, which are more likely in practice, close following is achieved, with a delay of about 0.6 seconds, to increase flow from zero to 10ml/s in about 5 seconds. Some disturbance can arise from changes in the flow resistance of the system, such as a partial blockage of a pipe. It is found that fairly abrupt closing and reopening of a pipe, using a needle valve to represent a blockage, do not cause more than a brief disturbance in flow rate (less than ten percent for a second or two) as the pump speed rapidly adjusts to restore the required condition. The general accuracy and repeatability of the controller is better than 5% for a flow rate range of 10:1. Thus two systems in parallel should give the required 120:1 extreme range.

As in some cases three chemicals are used at once it would be appropriate to provide a triplicate system.

While it is possible to enhance the performance of the controller the length of pipe between the mixing junction 22 and the nozzles on boom 12 now becomes significant in terms of the response of the spray actually delivered from the nozzles. One way of shortening the response time is to deliver metered chemical to the individual nozzles. However the complexity of piping and the need for 40 equal deliveries, on a typical large boom, at some 0.02 ml/s are great obstacles. Also lots of piping would remain full of chemical at the end of spraying, negating an advantage of the invention.

However by providing a central mixing chamber, e.g. at mixing junction 22, and supplying the output to a group of nozzles improved response can be achieved without too much complexity. By experiment it has been found that a group of about ten nozzles, fed at the centre by a T-connector from a specific pipe to the mixing chamber, can reduce the response time to 2.5 to 3 seconds from the more usual 6 or 7 seconds at the same, conventional pressure and flow conditions.

One suitable pump for item 32 is made by the Tuthill Pump Company of California, Model B9049-MCQS. This is a gear pump giving semi-positive feeding of liquid and has a magnetic link between drive and impeller to permit liquid isolation without rotating seals and to allow slip on overload.

A diaphragm may be used instead of a piston provided accuracy is maintained.

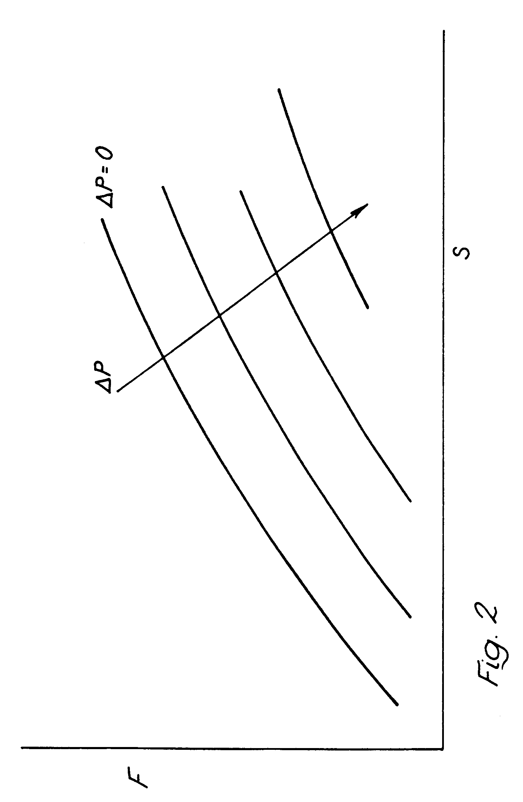

This arrangement avoids the need for a flow meter to measure either the carrier liquid or ingredient liquid flow. Flow meters are relatively expensive, not very robust, devices. Also flowmeters have a limited range, generally 10:1 or 20:1 which is too small, as explained below. Instead of a flow meter the pump and two pressure transducers coupled with a calculating and control device provides a simple, robust and economic arrangement by which the volume of displacement medium is measured with adequate accuracy from knowledge of the pump characteristics, typically as shown in Figure 2. Pressure sensors are readily available economic, reliable devices.

Figure 2 shows that if pump speed (S) is controlled with reference to pressure differences across the pump (ΔP) a required flow rate (F) is achievable. Accordingly a required supply rate of displacement medium can be achieved and, because the pump is small, rapid control is possible. The control regime can be provided by a microcomputer 50 which carries out calculations on the basis of the pump characteristics in a manner readily arranged by those skilled in the art. Flow rates between 1 millilitre/second (or less) and 15 millilitre/second are possible with speed variations of 400 to 2500 revolutions per minute and pressure differences of 0.1 bar to 1.0 bar, for the exemplary arrangement.

It is possible, and may be convenient, for the apparatus to be arranged to draw the active ingredient into container 34. To this end a change-over valve 38 is operable to connect volume D to the suction side of a pump 42. This pump extracts displacement medium from volume D and returns it to tank 10. This action can draw active ingredient into volume A through a suitable connection. Valves may be needed, in particular in conduit 36, to control this operation. If suitable connections and valves are provided it is possible to connect an unopened container of active ingredient to container 34 and draw some or all of its contents directly into volume A without opening the container. This reduces risk of contamination of the active ingredient and loss or spillage which could be harmful to the operator or the environment.

A valve 41 may be provided in piston 35 so that when volume A is emptied of active ingredient the displacement medium is allowed to enter volume A and conduit 36 to flush it clean of active ingredient.

The rapid control of active ingredient provided by the arrangement described enables "spot" spraying, i.e. the selective spraying of part only of an area of crop.

The controlling of the displacement medium may be open loop, that is to a set level, or closed loop. for example to maintain a required proportion in response to a sensor.

The constructional arrangements to apply the displacement technique described above to any particular sprayer will be readily apparent to those skilled in the art and will not be described further. It should however be noted that the "displacement" circuit operates at sprayer pressure, which is often several bars, and appropriate materials and construction are needed. The volume of the "displacement" circuit is much smaller than that of the carrier liquid circuit. Typically a carrier liquid tank is between 1000 and 4000 litres while an active ingredient volume of between one litre and 100 litres is typical. Spray rates may require active ingredient at between 0.5 litre/hectare and 5 litre/hectare. Accordingly, when allowance is made for different boom lengths the actual flow of active ingredient may have to be varied between 0.3 and 40 millilitres/second. Such a range is beyond one flowmeter, so several with suitable valves, etc. would be needed. Error is clearly possible with such an arrangement. The viscosity of the active ingredient is not always predictable as often suspensions are used. The active ingredient can include aggressive materials which would attack the actual flowmeter.

The technique permits the continuous mixing of a spray liquid to a required concentration with very rapid response to changes in requirement as the amount of liquid involved is small. Many of the problems associated with pre-mixing in a bulk tank are avoided as mixing takes place only when spray liquid is being dispersed. Many of the problems of earlier proposals for continuous mixing are overcome in that no pumps or flow meters are needed for the active ingredient liquid path. Accuracy is very good as there is a known relationship, which need not be 1:1, between the volume of displacement medium and the volume of active ingredient liquid. The use of a precision metering pump is also avoided, but a volumetric basis is used for measurement so the effects of viscosity change are reduced. The technique is also applicable to the mixing of nutrient solutions, for example those used in nutrient film culture, where continuous preparation to a possibly varying proportion is required. In such use the proportion may be controlled in a "closed loop" including a sensor responsive to the proportions of the mixed liquid.

## Claims

1. A method of preparing a mixture of a carrier liquid and an active liquid in required proportion characterised by:
providing a flow of pressurised carrier liquid [11],
determining the carrier liquid flow rate from pressure measurement [31],
providing a pumped liquid flow [37] of a proportion of said carrier liquid flow,
making pressure difference measurements [31,32] of the pumped proportional liquid flow,
controlling [50] said pumped proportional liquid flow to a selected required proportion of said carrier liquid flow from said pressure difference measurements and independently of the pressure of the pressurised carrier liquid,
displacing [35] active liquid with said pumped proportional liquid flow without liquid contact,
conveying [36] said displaced active liquid freely to said carrier liquid flow,
including said displaced active liquid in said carrier liquid flow,
thereby producing a liquid mixture in said required proportion without a flow meter for said carrier liquid or said active liquid.

2. An apparatus to prepare a mixed liquid including means [11] to supply pressurised carrier liquid along a path to utilisation means [12], a container [34] for a supply of active ingredient liquid, a flow path [36] to introduce active ingredient liquid from the container into the pressurised carrier liquid supply path [13], liquid isolating means [35] operable to displace active ingredient liquid from said container for introduction into the carrier liquid supply path, a pump [32] to supply a displacement medium to operate the liquid isolating means to displace active ingredient liquid and a controller [50] for said pump characterised in that the pump has associated pressure transducers [31,33] of the pressure difference across the pump and the controller is responsive to signals [55,56] from the transducers of said pressure difference to cause [53] said pump to supply displacement medium to produce a mixed liquid of specified properties for supply along said path to the utilisation means.

3. An apparatus according to Claim 2 characterised in that the displacement medium is carrier liquid from the pressurised supply upstream of the means to introduce active ingredient liquid.

4. An apparatus according to Claim 2 characterised in that the signals are processed in a calculating device, such as a dedicated microcomputer or like arrangement, in the controller to produce a pump control signal.

5. An apparatus according to Claim 4 characterised in that the pump for the displacement medium is further controlled in response to signals representing the operation of the utilisation means, said means being at least one of a sprayer and a nutrient film equipment.

6. An apparatus according to Claim 5 characterised in that the utilisation means is a sprayer and the signals include sprayer speed over the ground, sprayer boom size, required active ingredient concentration, spray liquid flow rate and the like.

7. An apparatus according to Claim 2 characterised in that any carrier liquid pump does not have to handle the active ingredient.

8. An apparatus according to Claim 2 characterised in that active ingredient can be drawn into the container by reversing the action of the displacement medium.

9. An apparatus according to Claim 2 characterised in that it includes flushing means operable on the completion of displacement of active ingredient liquid to supply a flushing liquid to the container and the introduction flow path.

10. An apparatus according to Claim 9 characterised in that the flushing means, when the displacement medium is the carrier liquid, includes a valve operable to bypass the liquid isolating means on displacement to its furthest extent and allow carrier liquid to flush the container and introduction means.

## Patentansprüche

1. Verfahren zur Herstellung einer Mischung aus einer Trägerflüssigkeit und einer aktiven Flüssigkeit in einem gewünschten Verhältnis, gekennzeichnet durch:
Bereitstellen einer Strömung einer Druck-Trägerflüssigkeit (11),
Bestimmen der Fließgeschwindigkeit der Trägerflüssigkeit mittels einer Druckmessung (31),
Bereitstellen einer gepumpten Flüssigkeitsströmung (37) eines Teils der Trägerflüssigkeitsströmung,
Durchführen einer Druckdifferenzmessung (31, 32) der gepumpten Flüssigkeitsteilströmung,
Regeln (50) der gepumpten Flüssigkeitsteilströmung auf ein ausgesuchtes gefordertes Verhältnis der Trägerflüssigkeitsströmung über die Druckdifferenzmessungen und unabhängig vom Druck der Druck-Trägerflüssigkeit,
Verdrängen (35) der aktiven Flüssigkeit durch die gepumpte Flüssigkeitsteilströmung ohne Flüssigkeitskontakt,
Freies Einleiten (36) der verdrängten aktiven Flüssigkeit in die Trägerflüssigkeitsströmung,
Aufnehmen der verdrängten aktiven Flüssigkeit in der Trägerflüssigkeitsströmung,
wodurch ein Flüssigkeitsgemisch im geforderten Verhältnis erzeugt wird, ohne eine Strömungsmessung der Trägerflüssigkeit oder der aktiven Flüssigkeit durchzuführen.

2. Gerät zur Herstellung eines Flüssigkeitsgemischs umfassend:
eine Vorrichtung (11) zur Zuführung einer Druck-Trägerflüssigkeit entlang eines Strömungswegs zu einer Benutzungsvorrichtung (12), ein Behältnis (34) für eine Zuführung einer Wirkstoffflüssigkeit, einen Strömungsweg (36) zur Einführung der Wirkstoffflüssigkeit aus dem Behältnis in den Zuführweg (13) der Druck-Trägerflüssigkeit, eine Flüssigkeits-Abtrennvorrichtung (35) zum Ersetzen der Wirkstoffflüssigkeit aus dem Behältnis, um sie in den Trägerflüssigkeits-Versorgungsweg einzuführen, eine Pumpe (32) zum Zuführen eines Verdrängungsmediums, so daß die Flüssigkeits-Abtrennvorrichtung die Wirkstoffflüssigkeit verdrängt, und eine Regelung (50) für die Pumpe, dadurch gekennzeichnet, daß die Pumpe zugehörende Druckwandler (31, 33) für die Druckdifferenz über der Pumpe aufweist, und daß die Regelung abhängig von Druckdifferenz-Signalen (55, 56) der Wandler die Pumpe veranlaßt (53), das Verdrängungsmedium zuzuführen, um ein Flüssigkeitsgemisch spezifischer Eigenschaften zu der Benutzungsvorrichtung entlang des Strömungswegs zuzuführen.

3. Gerät nach Anspruch 2, dadurch gekennzeichnet, daß das Verdrängungsmedium Trägerflüssigkeit aus dem unter Druck stehenden Versorgungszulauf der Vorrichtung ist, um Wirkstoffflüssigkeit einzuführen.

4. Gerät nach Anspruch 2, dadurch gekennzeichnet, daß die Signale in einer Rechenvorrichtung, wie bspw. einem Mikrocomputer oder einer ähnlichen Vorrichtung, in der Regelung verarbeitet werden, um ein Pumpen-Regelungssignal zu erzeugen.

5. Gerät nach Anspruch 4, dadurch gekennzeichnet, daß die Pumpe für das Verdrängungsmedium weiter geregelt wird abhängig von Signalen, die den Betrieb der Benutzungsvorrichtung darstellen, wobei die Vorrichtung zumindest ein Zerstäuber oder eine Nährstoffilm-Anlage ist.

6. Gerät nach Anspruch 5, dadurch gekennzeichnet, daß die Benutzungsvorrichtung ein Zerstäuber ist und die Signale die Zerstäubergeschwindigkeit über Grund, Zerstäuberauslegergröße, geforderte Wirkstoff-Konzentration, Zerstäubungsflüssigkeits-Fließgeschwindigkeit und ähnliches umfassen.

7. Gerät nach Anspruch 2, dadurch gekennzeichnet, daß keine Trägerflüssigkeits-Pumpe die Wirkstoffe befördern muß.

8. Gerät nach Anspruch 2, dadurch gekennzeichnet, daß der Wirkstoff in das Behältnis eingezogen werden kann, indem die Funktion des Verdrängungsmediums umgekehrt wird.

9. Gerät nach Anspruch 2, dadurch gekennzeichnet, daß es eine Spülungsvorrichtung umfaßt, die nach Beendigung der Verdrängung der Wirkstoffflüssigkeit eingreift, um eine Spülflüssigkeit zum Behältnis und zum Einführungs-Strömungsweg hinzuführen.

10. Gerät nach Anspruch 9, dadurch gekennzeichnet, daß die Spülungsvorrichtung ein Ventil aufweist, falls das Verdrängungsmedium die Trägerflüssigkeit ist, das die Flüssigkeits-Abtrennvorrichtung in weitestem Umfang bei der Ersetzung umgeht und der Trägerflüssigkeit erlaubt, das Behältnis und die Einführungsvorrichtung zu spülen.

## Revendications

1. Procédé de préparation d'un mélange composé d'un liquide porteur et d'un liquide actif dans une proportion requise, caractérisé par les étapes consistant à:
créer un flux de liquide porteur (11) sous pression,
déterminer le débit du liquide porteur par mesure de la pression (31),
créer un flux (37) de liquide pompé représentant une fraction dudit flux de liquide porteur,
faire des mesures (31,32) de différence de pression du flux fractionnel de liquide pompé,
doser (50) ledit flux fractionnel de liquide pompé à une proportion requise choisie par rapport audit flux de liquide porteur à partir desdites mesures de différence de pression et indépendamment de la pression du liquide porteur sous pression,
déplacer (35) le liquide actif avec ledit flux fractionnel de liquide pompé, sans contact entre les liquides,
acheminer librement (36) jusqu'audit flux de liquide porteur ledit liquide actif déplacé,
intégrer ledit liquide actif déplacé dans ledit flux de liquide porteur,
en produisant de ce fait un mélange de liquides dans ladite proportion requise sans débitmètre pour ledit liquide porteur ou ledit liquide actif.

2. Dispositif pour préparer un mélange de liquides, comprenant un moyen (11) pour acheminer un liquide porteur sous pression sur un parcours jusqu'à un moyen d'utilisation (12), un récipient (34) pour fournir un ingrédient liquide actif, un circuit d'écoulement (36) pour introduire dans le circuit (13) d'alimentation en liquide porteur sous pression l'ingrédient liquide actif provenant du récipient, un moyen d'isolation (35) de liquides servant à déplacer l'ingrédient liquide actif depuis ledit récipient pour l'introduire dans le circuit d'alimentation en liquide porteur, une pompe (32) d'alimentation en agent de déplacement pour faire fonctionner le moyen d'isolation de liquides afin de déplacer l'ingrédient liquide actif et un moyen de commande (50) pour ladite pompe, caractérisé en ce qu'avec la pompe coopèrent des capteurs (31,33) de pression qui détectent la différence de pression dans la pompe, et le moyen de commande réagit auxdits signaux (55,56) des capteurs de ladite différence de pression produits par les capteurs pour amener (53) ladite pompe à fournir l'agent de déplacement pour produire un mélange de liquides à propriétés voulues, à acheminer par ledit circuit jusqu'au moyen d'utilisation.

3. Dispositif selon la revendication 2, caractérisé en ce que l'agent de déplacement est le liquide porteur provenant de la source sous pression en aval du moyen pour introduire l'ingrédient liquide actif.

4. Dispositif selon la revendication 2, caractérisé en ce que les signaux sont traités dans un dispositif de calcul tel qu'un micro-ordinateur spécialisé ou autre dispositif similaire, présent dans le moyen de commande pour produire un signal de commande de pompe.

5. Dispositif selon la revendication 4, caractérisé en ce que la pompe pour l'agent de déplacement est en outre commandée en réponse à des signaux représentant le fonctionnement du moyen d'utilisation, ledit moyen étant constitué par un pulvérisateur et/ou un équipement de film de substance nutritive.

6. Dispositif selon la revendication 5, caractérisé en ce que le moyen d'utilisation est un pulvérisateur et les signaux comprennent la vitesse du pulvérisateur sur le sol, les dimensions de la perche du pulvérisateur, la concentration requise des ingrédients actifs, le débit du liquide de pulvérisation et autres.

7. Dispositif selon la revendication 2, caractérisé en ce qu'aucune pompe de liquide porteur n'a à prendre en charge l'ingrédient actif.

8. Dispositif selon la revendication 2, caractérisé en ce que l'ingrédient actif peut être entraîné jusque dans le récipient en inversant l'action de l'agent de déplacement.

9. Dispositif selon la revendication 2, caractérisé en ce qu'il comporte un moyen de rinçage apte à fonctionner au terme du déplacement de l'ingrédient liquide actif pour fournir un liquide de rinçage au récipient et au circuit d'écoulement d'introduction.

10. Dispositif selon la revendication 9, caractérisé en ce que le moyen de rinçage, lorsque l'agent de déplacement est le liquide porteur, comporte une vanne actionnable pour éviter le moyen d'isolation de liquide de son déplacement au maximum et pour permettre au liquide porteur de rincer le récipient et le moyen d'introduction.
